# DEMANDE DE BREVET EUROPEEN

(11) **EP 2 073 176 A1**
(43) Date de publication de la demande: **24.06.2009**
(21) Numéro de dépôt: 07291578.8
(22) Date de dépôt: 20.12.2007
(51) Int. Cl.: G07F 7/10, G06K 7/00

(54) **Système électronique portable avec contrôle d'une consommation d'énergie d'un élément du système**

(71) Demandeur: Gemalto SA, 92190 Meudon (FR)
(72) Inventeur: Gressus, Yvon, 92197 Meudon Cedex (FR); Mahalal, Alain, 92197 Meudon Cedex (FR)
(74) Mandataire: Cour, Pierre

(57) **Abrégé**

L'invention concerne un système 10 électronique portable pour contrôler une consommation d'énergie. Le système comprend au moins un élément 18 consommateur d'énergie. Le système comprend ou est relié à un objet 31 communiquant. L'objet communiquant comporte des moyens pour communiquer au moins dans un sens de communication avec l'extérieur de l'objet communiquant.

Selon l'invention, l'objet communiquant est apte à contrôler et gérer une consommation d'énergie d'au moins un élément consommateur d'énergie.

L'invention concerne également un objet 31 communiquant.

## Description

### Domaine technique de l'invention :

La présente invention concerne, d'une façon générale, un système pour contrôler une consommation d'énergie. Le système comporte au moins un élément consommateur d'énergie. Le système comporte ou est relié à un objet communiquant.

La présente invention porte également sur un tel objet communiquant.

Dans le présent document de brevet, on entend par l'expression « objet communiquant », un objet (ou « token » en langue anglaise) comportant des moyens de traitement et de contrôle de données et des moyens pour communiquer au moins dans un sens de communication avec l'extérieur.

### Etat de la technique :

II. est connu d'utiliser, par exemple, pour une application de paiement bancaire, un terminal connecté, au travers d'un ordinateur personnel hôte, via un réseau filaire Internet, à un serveur d'autorisation de transaction bancaire.

Le terminal est utilisé par un commerçant d'un produit (ou d'un service) à vendre.

Le terminal est équipé notamment d'un écran d'affichage d'informations, d'un clavier, et d'un lecteur de carte à puce ou de carte à piste magnétique.

Le clavier est utilisé pour saisir des données pour lancer l'application de paiement bancaire et des données propres à une transaction, tel qu'un montant d'un produit (ou d'un service) à acheter.

L'utilisateur du terminal insère une carte à puce ou une carte à piste magnétique au sein du lecteur de carte pour que le terminal récupère et enregistre les données bancaires propres à un acheteur après son authentification.

Une fois les données de la transaction propre à l'application de « paiement bancaire » récupérées et un traitement effectué par l'application, le terminal transmet, éventuellement, via l'ordinateur personnel hôte et le réseau Internet, au serveur d'autorisation, une demande d'autorisation. Le serveur d'autorisation autorise ou interdit la transaction de paiement bancaire, depuis le compte bancaire de l'acheteur, en transmettant au terminal, en retour, une réponse correspondante.

Cependant, une telle solution connue présente un inconvénient majeur.

En effet, le terminal, utilisé en tant que système, disposant de sa propre alimentation, présente une autonomie en énergie limitée. Une telle limitation en énergie peut s'avérer critique notamment lorsque l'énergie disponible est juste suffisante pour un petit nombre de transactions effectuées sur le terminal.

### Exposé de l'invention :

L'invention cherche à atténuer l'inconvénient majeur précédemment indiqué en fournissant un système électronique portable pour contrôler une consommation d'énergie.

Plus particulièrement, l'invention est un système électronique portable pour contrôler une consommation d'énergie d'au moins un de ses éléments consommateurs d'énergie. Le système comporte un objet communiquant ou est relié à un objet communiquant. L'objet communiquant comporte des moyens pour communiquer au moins dans un sens de communication avec l'extérieur de l'objet communiquant.

Selon l'invention, l'objet communiquant est apte à contrôler et gérer une consommation d'énergie d'au moins un élément consommateur d'énergie du système.

Le principe général de l'invention repose donc sur une utilisation d'un objet communiquant adapté pour commander et économiser l'énergie consommée d'un ou plusieurs composants équipant le système.

II convient de noter que le système de l'invention coopère avec un objet communiquant qui peut constituer un élément soit rapporté et donc externe au système soit intégré au sein du système.

Ainsi, le système, par rapport à la solution de l'art antérieur explicitée supra, augmente son autonomie en termes d'énergie. Le système peut donc être utilisé plus longtemps en fonctionnement et/ou pour un plus grand nombre de transactions électroniques.

Il convient de' noter que l'invention n'impose aucune contrainte quant à la nature de la transaction. En d'autres termes, le système de l'invention peut être utilisé pour tout type de transaction.

Selon un autre aspect, l'invention est un objet communiquant pour contrôler une consommation d'énergie externe à l'objet communiquant.

Plus exactement, l'objet communiquant comporte des moyens pour communiquer au moins dans un sens de communication avec l'extérieur.

Selon l'invention, l'objet communiquant est apte à contrôler et gérer une consommation d'énergie d'au moins un élément consommateur d'énergie externe à l'objet communiquant.

L'objet communiquant est destiné à coopérer avec une ou plusieurs entités extérieures pour fonctionner.

On comprend que l'objet communiquant constitue un élément rapporté permettant de traiter de la gestion de l'énergie consommée par un ou plusieurs composants extérieurs.

En outre, l'objet communiquant est, de préférence, applicatif. Plus précisément, l'objet communiquant peut exécuter au moins une application lançable depuis l'extérieur de l'objet communiquant.

### Description des dessins :

D'autres caractéristiques et avantages de l'invention apparaîtront à la lecture de la description de deux modes de réalisation préférentiels de l'invention, donnés à titre de simples exemples indicatifs non limitatifs et des dessins annexés, dans lesquels :
- la figure 1 présente un synoptique d'un ordinateur personnel hôte relié, d'une part, à un système, selon l'invention, et d'autre part, à un serveur ;
- la figure 2 illustre un schéma détaillé d'un premier mode de réalisation du système de la figure 1 communiquant avec l'ordinateur personnel hôte à travers une interface de type sans contact ;
- la figure 3 présente un schéma détaillé d'un deuxième mode de réalisation du système de la figure 1 communiquant avec l'ordinateur personnel hôte à travers une interface de type à contact ;
- la figure 4 illustre un schéma détaillé du système de la figure 3 coopérant avec une carte à puce, en tant qu'objet communiquant ; et
- la figure 5 présente un chronogramme de principe faisant apparaître des signaux de commande issus de l'objet communiquant pour activer ou désactiver une alimentation d'un périphérique interne au système de la figure 4.

### Description de deux modes de réalisation particuliers :

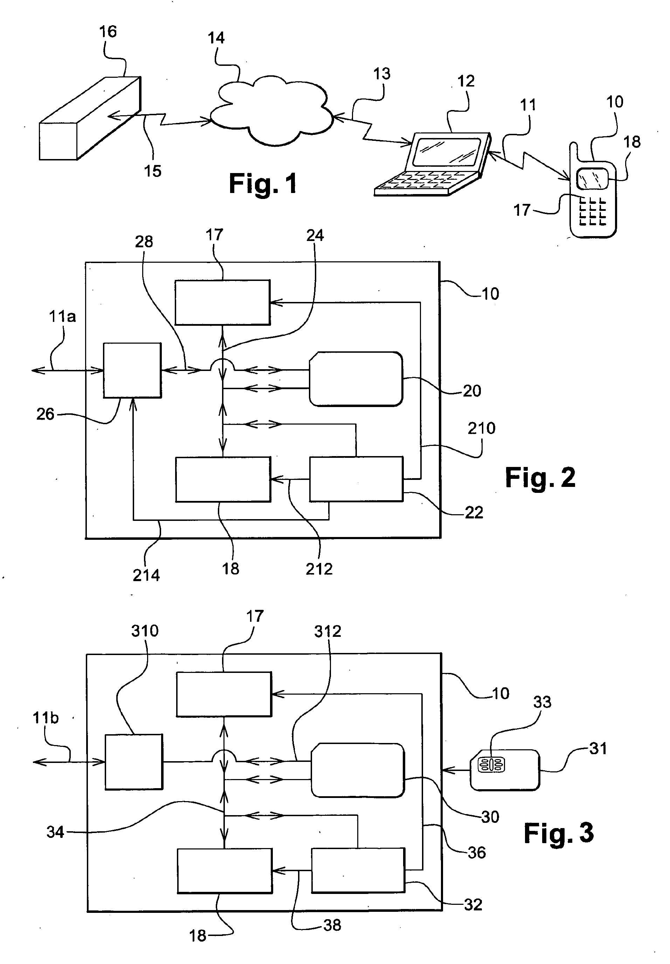

Comme montré sur la figure 1, un système 10 est relié, au travers d'un ordinateur 12 personnel hôte et d'un réseau 14 de communication, à un serveur 16.

Il faut entendre dans le présent document de brevet par le mot « serveur », un dispositif électronique comprenant des moyens de traitement et de contrôle de données et des moyens de mémorisation mémorisant au moins un programme informatique applicatif, ou application, et accessible depuis l'extérieur.

Un accès, depuis le système 10, au serveur 16 permet, à ce dernier, d'effectuer un traitement propre à l'application à exécuter.

Le serveur 16 est relié, via une liaison 15 filaire ou non filaire, au réseau 14 de communication, de type public ou privé, Internet ou Intranet.

II convient de noter que le système 10 est un système de transaction électronique.

Le système 10 est un terminal 10.

En tant que système, il peut revêtir de multiples formes.

Il peut consister, par exemple, en un « dongle » muni d'une interface de communication sans contact, par exemple de type ISO 14 443 ou Zigbee ou sans contact USB (acronyme pour « Universal Serial Bus » en langue anglaise) et/ou muni d'une interface de communication à contact, par exemple de type USB.

Le terminal 10 est relié à l'ordinateur 12 personnel (ou PC acronyme pour « Personal Computer » en langue anglaise) au travers d'une liaison 11 filaire ou non filaire.

Le PC 12 est relié au réseau 14 de communication au travers d'une liaison 13 filaire ou non filaire.

Selon une alternative de réalisation, le terminal est relié à un téléphone mobile ou un assistant numérique personnel (ou PDA acronyme pour « Personal Digital Assistant » en langue anglaise), lui-même relié au travers d'un réseau de radiotéléphonie, au serveur.

Le terminal 10 est doté d'un clavier 17, et d'un écran 18 d'affichage.

Selon une variante de réalisation (non représentée), le terminal est doté d'un lecteur biométrique à la place d'un clavier, pour authentifier un utilisateur du terminal, tel qu'un acheteur d'un produit ou d'un service proposé à travers le réseau de communication, tel Internet.

De plus, le terminal 10 est muni, de manière optionnelle, d'un ou plusieurs lecteurs (non représentés) de support d'informations d'un ou plusieurs types, tel qu'un lecteur de carte de format ISO 7816, un lecteur de carte de type carte SIM (acronyme pour « Subscriber Identity Module » en langue anglaise), un lecteur biométrique, tel un lecteur d'empreinte digitale, un lecteur d'iris d'un oeil, et/ou un lecteur facial.

Encore de manière optionnelle, le terminal 10 est pourvu d'un ou plusieurs connecteurs d'un ou plusieurs types, tel qu'un connecteur de type USB (acronyme pour « Universal Serial Bus » en langue anglaise) SD (acronyme pour « Secure Digital » en langue anglaise) ou MMC (acronyme pour « Multi-Media Card » en langue anglaise).

Toujours de manière optionnelle, le terminal 10 est équipé d'une ou plusieurs interfaces de communication sans contact de proximité de type radiofréquence, par exemple de type Bluetooth, NFC (acronyme pour « Near Field Communication » en langue anglaise), infra rouge ou IR (acronyme pour « Infra Red » en langue anglaise), et/ou d'une ou plusieurs interfaces de communication sans contact à distance, telle qu'une antenne pour accéder à un réseau GSM (acronyme pour « Global System for Mobiles » en langue anglaise), GPRS (acronyme pour « General Packet Radio Service » en langue anglaise), CDMA (acronyme pour « Code Division Multiple Access » en langue anglaise) ou équivalent.

On entend, dans le présent document de brevet, par l'expression « système ou dispositif sécurisé », un système ou un dispositif comportant au moins un élément intégré, et l'accès à tout élément intégré ou à des données échangées entre deux éléments intégrés est particulièrement difficile voire impossible depuis l'extérieur, sans impliquer une destruction, une perturbation du fonctionnement ou un dysfonctionnement du dispositif ou du système.

Ainsi, on peut définir trois niveaux de sécurité :
- niveau 0 : tout PC standard, éventuellement relié à un réseau de communication, qui n'a pas fait l'objet d'une mesure de sécurité particulière, par exemple un PC de bureau ou un PC portable ;
- niveau 1 : un PC ou un réseau de plusieurs PCs spécifiquement conçus et/ou préparés pour effectuer quelques mesures requérant des droits d'accès connus du ou des utilisateurs autorisés. L'accès à une donnée traitée et/ou à traiter est restreint depuis l'extérieur. De tels PCs ne sont pas ouverts au monde extérieur, et ne possède aucun lecteur tel qu'un lecteur de disque compact (ou CD) ou de disque vidéo numérique (ou DVD) qui n'est pas sous contrôle d'accès. De tels PCs peuvent être situés dans un site à accès contrôlé, par exemple nécessitant des droits d'accès présentés via un support d'identification de son porteur ;
- niveau 2 : un système ou dispositif intelligent, tel un support de données de type carte à puce (ou « smart card » en langue anglaise) ou équivalent, qui est complètement fermé au monde extérieur, et atteint le niveau de sécurité le plus élevé connu à ce jour. Une telle considération est valable du début à la fin du cycle de vie du système ou dispositif. Pour ce faire, des mesures matérielles et logicielles sont prévues pour concevoir et/ou préparer le système ou dispositif intelligent. On peut notamment citer des verrous physiques et/ou logiques restreignant fortement l'accès à une donnée traitée ou à traiter par le système ou dispositif intelligent sans autorisation.

Un environnement de niveau de sécurité 0 n'autorise pas de signer et/ou vérifier une donnée traitée. Un tel environnement est un environnement non sécurisé.

Un environnement de niveau de sécurité 1 n'est pas suffisamment sécurisé pour signer et/ou vérifier une donnée traitée. Les clefs cryptographiques requises pour effectuer la signature constituent des données trop sensibles. Ainsi, un tel environnement ne permet pas d'afficher, de modifier éventuellement, d'imprimer une donnée à signer et/ou à vérifier. Un tel environnement est un environnement auquel on peut faire en partie confiance.

Un environnement de niveau de sécurité 2 est spécifiquement conçu pour traiter une donnée sensible, telle qu'une ou des clefs cryptographiques. En outre, un tel environnement fait l'objet d'une ou plusieurs mesures de sécurité depuis sa conception jusqu'à la fin de sa durée de vie. Un tel environnement est un environnement auquel on peut faire pleinement confiance.

On considère, de préférence, un terminal 10 sécurisé en tant que système sécurisé. Le terminal 10 constitue un appareil fonctionnant dans un environnement sécurisé, à savoir notamment physiquement fermé dans un boîtier et accessible logiquement avec des droits particuliers prédéterminés.

Le terminal 10 comporte ou non un lecteur de support intelligent de données. Le support intelligent constitue un objet communiquant.

Le système 10 coopère avec l'objet communiquant, tel qu'explicité infra en détail notamment en relation avec les figures 2 et 3.

L'objet communiquant constitue, lui-même, un dispositif sécurisé, tel qu'une carte à puce ou un support de données équivalent.

L'objet communiquant est prévu soit en tant qu'élément incorporé au sein du système 10 soit en tant qu'élément rapporté et relié, éventuellement via un lecteur de support adapté, au système 10.

Le terminal 10 est mis en oeuvre, ci-dessous, par exemple, pour une application de paiement bancaire, au titre d'une application particulière exécutée par l'objet communiquant.

Bien entendu, il est clair, cependant, qu'une ou plusieurs autres applications peuvent être supportées par l'objet communiquant.

Il peut s'agir notamment :
- d'une application de stockage de données ;
- d'une application de santé ;
- d'une application de consultation de données ;
- d'une application d'un programme de fidélité ;
- d'une application de paiement et/ou de validation d'un titre de transport ; et/ou
- d'une application de gestion d'au moins une interface de communication avec l'extérieur de l'objet communicant, et, éventuellement du système avec lequel l'objet communiquant coopère, ou dans lequel l'objet communiquant est intégré.

Il est à noter que l'application ou les applications supportées par l'objet communiquant peuvent nécessiter d'interagir ou non avec au moins un périphérique dont le système 10 est doté, tel le clavier 17, l'écran 18, et/ou d'autre(s).

L'objet communiquant, en tant qu'élément intégré au système 10 ou en tant qu'élément rapporté au système, constitue le coeur central du système 10.

Selon l'invention, l'objet communiquant est adapté pour contrôler et gérer, au moins en partie, une consommation d'énergie d'au moins un périphérique prévu au sein du système 10.

De cette manière, l'objet communiquant peut activer ou désactiver, totalement ou en partie, l'alimentation d'un périphérique impliqué ou non au cours de l'application bancaire exécutée.

Le système 10 passe alors dans un mode dit « basse consommation » en énergie.

De manière optionnelle, le PC 12 transmet un signal de commande destiné à l'objet communiquant pour que l'objet communiquant passe dans le mode « basse consommation » du système 10, en désactivant l'alimentation d'au moins un des éléments du système 10.

L'objet communiquant intègre et supporte, outre l'application de paiement bancaire selon l'exemple décrit, une application résidente de gestion d'énergie consommée par tout ou partie des éléments ou périphériques prévus au sein du système 10. L'application de gestion d'énergie consommée est exécutée lors de l'exécution de l'application de paiement bancaire.

Comme l'objet communiquant connaît une ou des tâches qu'il exécute, l'objet communiquant peut autoriser ou, au contraire, interdire l'accès à une ou plusieurs sources d'alimentation interne(s) et/ou externe(s) à un ou plusieurs périphériques mis en jeu.

Ainsi, le système 10 consomme moins que si l'ensemble de ses périphériques sont alimentés alors qu'au moins certains d'entre eux ne sont pas utilisés au cours de l'exécution de l'application bancaire.

Comme montré sur la figure 2, le terminal 10 sécurisé, en tant que système, comporte, selon un premier mode de réalisation, le clavier 17, l'écran 18, un circuit intégré 20 ou puce, un dispositif 22 de gestion d'alimentation en énergie et une puce 26 de gestion d'une communication sans contact avec l'extérieur.

Le clavier 17, l'écran 18, la puce 20, le dispositif 22 de gestion d'alimentation en énergie et la puce 26 de gestion d'une communication sans contact, dite puce sans contact, sont reliés entre eux au travers d'un bus 24 de communication interne au système 10.

La puce 20, en tant qu'objet communiquant, constitue le coeur central du système 10.

L'objet communiquant renferme, de préférence, au sein d'un seul et même bloc réduit en taille, des éléments qui le composent, afin d'assurer un maximum de sécurité aux données que l'objet communiquant traite.

La puce 20 est incorporée au système 10. De ce fait, le système 10 n'a pas besoin de lecteur spécifique pour communiquer avec la puce 20.

La puce 20 est incorporée au sein du système. La puce 20 est par exemple soudée sur une carte à circuits imprimés propre au système 10.

La puce 20 inclut, en particulier, des moyens de traitement et de contrôle de données, des moyens de mémorisation de données qui englobent au moins une mémoire de type non volatile, et éventuellement au moins une mémoire de type volatile, et au moins une interface entrée/sortie depuis/vers l'extérieur.

Les moyens de traitement et de contrôle de données comprennent au moins une unité de traitement logique et/ou au moins un microcontrôleur. De tels moyens sont actifs et permettent la mise en oeuvre de fonctions élaborées, en particulier des reconnaissances de clefs et/ou des calculs cryptographiques.

Un ou plusieurs programmes de codage et de décodage, un PIN code (acronyme pour « Personal Identification Number » en langue anglaise), et/ou des secrets sont stockés en mémoire de type non volatile et inaccessibles depuis l'extérieur de la puce 20.

Le ou les programmes de codage et de décodage, le PIN code, et/ou les secrets permettent d'assurer un niveau de sécurité de niveau 2.

La ou les mémoires de type non volatile sont de type ROM (acronyme pour « Read Only Memory » en langue anglaise) et/ou de type Flash. La mémoire de type non volatile stocke en particulier un système d'exploitation permettant le fonctionnement de la puce 20. La mémoire de type non volatile stocke également un programme de sauvegarde d'énergie consommée par un ou plusieurs périphériques du système 10.

La puce 20 intègre une ou plusieurs mesures de protection limitant l'accès aux données qu'elle comporte. De ce fait, toute intrusion dans la puce 20 est rendue difficile voire impossible. Aucun programme malicieux ne peut pénétrer la puce 20.

La puce 20 est protégée physiquement de l'extérieur par une ou plusieurs couches de matériau isolant électriquement pour interdire tout accès physique à la puce 20.

De manière optionnelle, la puce 20 inclut également un crypto-processeur pour générer des clefs et stocker une ou plusieurs clefs privées. De ce fait, une authentification et une signature électronique des données renforçant le niveau de protection des données sont rendues possibles.

Le système 10 est accessible depuis l'extérieur au travers d'un bus 28 de communication externe.

Le bus 28 de communication externe n'est pas sécurisé car ouvert à l'extérieur du système 10 et donc accessible depuis une entité externe au système 10.

En revanche, le bus 24 de communication est sécurisé puisqu'il est localisé au sein du système 10 et est exclusivement accessible depuis la puce 20.

La puce 20 est adaptée pour piloter, d'une part, le bus 24 de communication interne au système 10, et, d'autre part, le bus 28 de communication externe au système 10.

La puce 20 est reliée, via le bus 24 de communication interne, au dispositif 22 de gestion de l'alimentation en énergie.

La puce 20 contrôle et gère en outre, au travers du dispositif 22 de gestion d'alimentation en énergie, l'alimentation au moins partielle du clavier 17, de l'écran 18, et/ou la puce 26 sans contact.

Le dispositif 22 de gestion d'alimentation en énergie est relié à chaque élément consommateur d'énergie à gérer au sein du système 10. Plus exactement, le dispositif 22 de gestion d'alimentation en énergie est relié, au travers d'une première connexion 210 au clavier 17, au travers d'une deuxième connexion 212 à l'écran 18, et au travers d'une troisième connexion 214 à la puce 26 sans contact.

Il est clair que, selon des variantes de réalisation, un autre et/ou d'autres périphériques sont également contrôlés et gérés pour leur alimentation. Dans ce cas, de tels périphériques sont également reliés, au travers du dispositif 22 de gestion d'alimentation en énergie, à la puce 20.

La puce 20 gère une interface 11 a de communication sans contact avec l'environnement extérieur du système 10, au travers de la puce 26 sans contact.

De manière avantageuse, la puce 20 coopère avec le dispositif 22 de gestion d'alimentation en énergie, pour activer l'alimentation de chaque périphérique concerné. L'activation de l'alimentation d'un périphérique est seulement effectuée lorsque, selon une première situation, le périphérique est impliqué lors de l'exécution par la puce 20 de l'application ou, selon une deuxième situation, le périphérique est sur le point d'être utilisé par un utilisateur du système 10.

Dans la deuxième situation, l'utilisation par un utilisateur s'apprêtant à utiliser un périphérique est anticipée par une détection appropriée au niveau du périphérique impliqué.

La puce 20 active, de préférence, l'alimentation de chaque périphérique uniquement avant qu'il effectue une tâche.

Ainsi, la puce 20 active l'alimentation de l'écran 18 uniquement lorsqu'un affichage d'informations est prévu par l'application que la puce 20 exécute. Une telle activation se produit juste avant l'implication de l'écran 18 dans une tâche exécutée par l'application. La puce 20 active l'alimentation du clavier 17 uniquement lorsque l'application à exécuter fait intervenir une saisie de données au clavier 17 par un utilisateur. La puce 20 active l'alimentation de la puce 26 sans contact uniquement lorsque l'application à exécuter fait intervenir une communication en sans contact avec le monde extérieur, soit de manière prévue par l'application soit par une détection d'entrée dans un champ électromagnétique destiné à réveiller le système 10.

De manière optionnelle, le système 10 inclut une batterie (non représentée) qui fournit au moins deux niveaux de tension. La batterie est reliée, via le bus 24 de communication interne, au dispositif 22 de gestion de l'alimentation en énergie à chaque périphérique consommateur d'énergie, tel le clavier 17, l'écran 18, et/ou la puce 26 sans contact.

De manière optionnelle, le système 10 inclut un dispositif de commande de ré-initialisation externe du système 10, tel qu'un bouton-poussoir (non représenté) ou autre.

De manière optionnelle, le système 10 est relié à une source d'alimentation en énergie externe au travers du bus 28 de communication externe.

La puce 26 sans contact est reliée à une antenne (non représentée) pour échanger via un lien radiofréquence avec l'extérieur du système 10.

La puce 26 sans contact est une puce de gestion de communication sans contact de proximité et, de préférénce, de basse consommation.

La puce 26 sans contact est, par exemple, une puce de gestion de communication sans contact de proximité, de type Bluetooth, Wibree, Wifi, Zigbee, NFC (acronyme pour « Near Field Communication » en langue anglaise), ou infra rouge et/ou sans fil USB (ou « wireless USB » en langue anglaise).

Le système 10 est enfermé dans un unique boîtier. Seuls quelques périphériques, tel le clavier 17, l'écran 18, sont accessibles depuis l'extérieur du système 10 par un utilisateur.

On présente maintenant, en relation avec la figure 3, un deuxième mode de réalisation du système 10, selon lequel l'objet communiquant n'est pas intégré au système comme dans le premier mode, mais est un élément rapporté constitué par un objet 31 portable.

Le système 10 comporte le clavier 17, l'écran 18, un lecteur 30 d'objet, un dispositif 32 de gestion d'alimentation en énergie, et un connecteur 310 de type à contact pour échanger avec le monde extérieur au système 10.

Le système 10 est apte à recevoir l'objet 31 portable intelligent.

L'objet 31 portable constitue un support, telle une carte à puce de type SIM (acronyme pour « Subscriber Identity Module » en langue anglaise). L'objet 31 portable comporte une puce et un module 33 à contacts pour accéder à la puce. La puce, en tant qu'objet communiquant, comporte les mêmes éléments d'intelligence que ceux explicités pour la puce 20 du premier mode de réalisation. L'objet communiquant est externe au système 10.

Selon une telle variante, l'objet 31 portable est amovible.

L'objet 31 portable est inséré, dans une fente ménagée dans le système 10, au sein du lecteur 30 d'objet.

Le lecteur 30 d'objet comporte des contacts (non représentés) venant en regard du module 33 à contacts de l'objet 31 portable après son insertion.

Le lecteur 30 d'objet est adapté pour échanger des données, d'une part, en interne entre la puce de l'objet communiquant et un ou des périphériques internes au système 10, et d'autre part, entre la puce de l'objet communiquant et la puce 26 sans contact, pour communiquer avec l'environnement extérieur au système 10.

Lorsque l'objet 31 portable est inséré, la puce de l'objet communiquant est reliée à chaque périphérique, à savoir le clavier 17, et l'écran 18, pouvant être impliqué lors de l'exécution de l'application bancaire.

L'application bancaire est supportée par la puce de l'objet 31 portable.

De préférence, l'application bancaire est exécutable au travers d'un serveur compris au sein de l'objet 31 portable. De cette manière, l'application peut être activée depuis un client extérieur au système 10, au travers d'un réseau de communication de type sans contact, depuis un téléphone mobile ou d'un PC connecté à ce réseau.

L'objet 31 portable, une fois inséré, est relié, au travers d'un bus 34 de communication interne au système 10, au clavier 17, à l'écran 18, au dispositif 32 de gestion d'alimentation en énergie.

L'objet 31 portable possède le pilote nécessaire à la gestion des signaux du bus 34 de communication interne au système 10.

Le bus 34 de communication interne au système 10 est de type série, par exemple de type connu en soi.

Il convient de rappeler que le bus 34 de communication interne nécessite de sélectionner l'élément ou périphérique du système 10 avant de lui adresser des données, tel que connu en soi.

Il peut s'agir d'un bus de type SPI (acronyme pour « Serial Peripheral Interface » en langue anglaise).

Selon une alternative de réalisation (non représentée), le bus de communication interne est de type parallèle.

Le bus 34 de communication interne au système comporte deux lignes de communication entre l'objet 31 portable et les périphériques, l'une relative à des données transmises, et l'autre relative à une horloge de cadencement de la transmission des données. La ligne relative aux données transmises est désignée par DA (acronyme pour « DAta » en langue anglaise). La ligne relative l'horloge est désignée par CL (acronyme pour « CLock » en langue anglaise).

L'objet 31 portable, une fois inséré, est relié, au travers d'un bus 312 de communication externe au système 10, et d'un connecteur 310 USB constituant une interface 11 b à contact avec l'extérieur du système 10.

L'objet 31 portable multiplexe, si une connexion USB est détectée, les signaux de commande du bus 34 de communication interne avec des affectations imposées par l'ISO 7816, par exemple des signaux du PAD I/O, et du PAD VPP avec les signaux série de données DA et d'horloge CL.

Lorsque l'objet 31 portable n'est pas inséré, ses fonctions de type ISO 7816 sont accessibles.

Optionnellement, le système 10 et l'objet 31 portable sont accessibles, en outre, au travers d'au moins une autre interface de communication à contact et/ou sans contact (non représentée). L'objet 31 portable est adapté pour contrôler et gérer une telle ou de telles autres interfaces de communication. Dans un tel cas, plusieurs interfaces de communication existent avec l'extérieur du système 10 et donc de l'objet 31 portable, l'objet 31 portable définit une interface de communication prioritaire par rapport aux autres interfaces de communication co-existantes. Par exemple, si deux interfaces de communication coexistent, dont l'une est à contact et l'autre est sans contact, l'interface de communication prioritaire est donnée à l'interface sans contact.

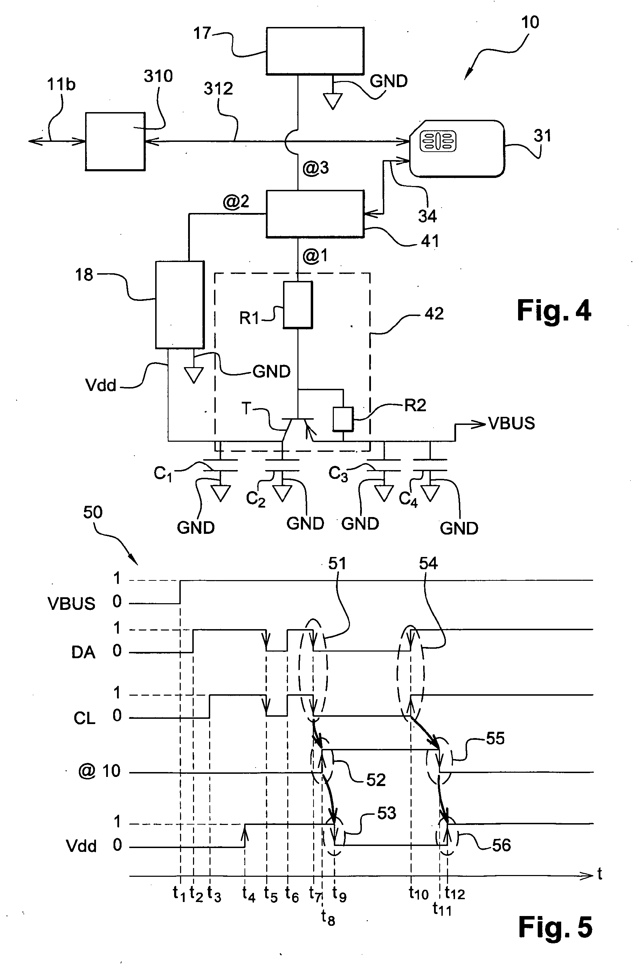

Comme montré sur la figure 4, le système 10 comporte un dispositif 41 de sélection d'un ou plusieurs éléments consommateurs d'énergie parmi le clavier 17 et l'écran 18, et un dispositif 42 de commutation.

Les éléments déjà décrits en relation avec la figure 3 comportent les mêmes références.

Le dispositif 41 de sélection d'un ou plusieurs éléments consommateurs d'énergie parmi le clavier 17 et l'écran 18, et le dispositif 42 de commutation constituent le dispositif 32 de gestion d'alimentation en énergie de la figure 3.

L'objet 31 portable est relié, au travers du bus 34 de communication interne au système, au dispositif 41 de sélection d'un ou plusieurs éléments consommateurs d'énergie parmi le clavier 17 et l'écran 18.

Le dispositif 41 de sélection d'un ou plusieurs éléments consommateurs d'énergie parmi le clavier 17 et l'écran 18 est contrôlé et piloté par l'objet 31 portable.

Le dispositif 41 de sélection d'un ou plusieurs éléments consommateurs d'énergie parmi le clavier 17 et l'écran 18 est relié, via un premier lien @1, au dispositif 42 de commutation, via un deuxième lien @2, à l'écran 18, et, via un troisième lien @3, au clavier 17.

Le dispositif 41 de sélection permet de sélectionner un élément consommateur d'énergie parmi l'ensemble des éléments consommateurs d'énergie.

Le dispositif 41 de sélection est un routeur 41 tel que connu en soi. Le routeur 41 sélectionne une adresse relative à un destinataire pour lui transmettre des données, et aiguille les données au destinataire sélectionné.

Selon une variante de réalisation, le dispositif 41 de sélection est un renifleur de paquets (ou « packet sniffer » en langue anglaise), tel que connu en soi, qui est relié et associé à un élément consommateur d'énergie dont on cherche à réduire la consommation. On rappelle que le renifleur de paquets est une sorte de sonde écoutant les informations transmises et récupérant, à la volée, celles qui l'intéressent, lorsque les informations ne sont pas chiffrées.

Le routeur 41 est un décodeur d'adresses et joue un rôle d'aiguilleur. Le routeur 41 gère trois adresses distinctes. Le routeur 41 sélectionne une première adresse @1 1 pour s'adresser au dispositif 42 de commutation, une deuxième adresse @2 pour s'adresser à l'écran 18, et une troisième adresse @3 pour s'adresser au clavier 17.

Le routeur 41 est relié, au travers l'adresse @1, au dispositif 42 de commutation.

Le routeur 41 permet de transmettre les signaux de commande émanant de l'objet 31 portable au dispositif 42 de commutation, pour activer ou désactiver l'alimentation de l'écran 18, en tant qu'élément consommateur d'énergie.

Le dispositif 42 de commutation est basé sur un transistor T.

Le dispositif 42 de commutation comprend deux résistances R1 et R2 et un transistor T de type PNP.

Une base du transistor T est reliée à une première résistance R1 au routeur 41. La valeur de R1 est par exemple de 2,2 KOhms.

Un collecteur du transistor T est relié à une des deux bornes d'alimentation de l'écran 18.

Une deuxième résistance R2 est connectée, d'une part, à la base du transistor T, et d'autre part, à un émetteur du transistor T. La valeur de R2 est par exemple de 100 KOhms.

L'émetteur du transistor T est relié à une borne d'alimentation d'une source d'alimentation.

La source d'alimentation est externe. La source d'alimentation fournit, à travers le connecteur 310 USB, deux bornes d'alimentation, à savoir l'une relative à une tension GND de référence nulle (en Volts), et l'autre relative à une tension VBUS, par exemple d'une valeur de 5 Volts, permettant d'alimenter l'ensemble des éléments du système 10.

La borne d'alimentation relative à la tension GND de référence nulle est connectée à chaque élément du système 10, à savoir le clavier 17, l'écran 18, l'objet 31 portable, le routeur 41, et le transistor T du dispositif 42 de commutation.

Le collecteur du transistor T est, de préférence, relié, au travers de deux capacités C1 et'C2, à la borne d'alimentation relative à la tension GND de référence nulle.

L'émetteur du transistor T est, de préférence, relié, au travers de deux capacités C3 et C4, à la borne d'alimentation relative à la tension GND de référence nulle.

Les capacités C1, C2, C3 et C4 ont un rôle de découplage de la tension d'alimentation, pour supprimer les parasites sur le signal de tension VBUS fourni.

La valeur de C1, et C3 est, par exemple, de 10 µF. La valeur de C2, et C4 est, par exemple, de 100 nF.

La borne d'alimentation relative à la tension VBUS est connectée uniquement à une partie du ou des éléments du système 10, à savoir celui ou ceux pour lesquels il n'est pas prévu de contrôler et gérer l'alimentation, par exemple le clavier 17, l'objet 31 portable, le routeur 41, et le transistor T du dispositif 42 de commutation.

La borne d'alimentation relative à la tension VBUS est indirectement connectée à une partie du ou des éléments du système 10, à savoir celui ou ceux pour lesquels il est prévu de contrôler et gérer l'alimentation, par exemple le l'écran 18.

Le dispositif 42 de commutation fonctionne de la manière suivante :
- lorsque l'objet 31 portable sélectionne le dispositif 42 de commutation et transmet un signal de commande de niveau 1, le transistor T est bloqué. L'écran 18 n'est pas alimenté sur l'une de ses bornes d'alimentation Vdd en tension par la tension VBUS.
- lorsque l'objet 31 portable sélectionne le dispositif 42 de commutation et transmet un signal de commande de niveau 0, le transistor T est passant, la tension sur l'émetteur du transistor T est reportée sur le collecteur du transistor T. L'écran 18 est alimenté sur la borne d'alimentation Vdd en tension par la tension VBUS. La base du transistor T est à un niveau de tension stable de R1/(R1+R2) de la tension VBUS.

De cette manière, à un moment considéré opportun par l'objet 31 portable, l'objet 31 portable contrôle et gère, en activant ou désactivant l'alimentation de l'écran 18. Ainsi, tant que l'écran 18 n'est pas à utiliser par l'application bancaire exécutée par l'objet 31 portable, l'alimentation de l'écran 18 est mise en sommeil. Dès que l'écran 18 est à utiliser par l'application bancaire exécutée par l'objet 31 portable, l'alimentation de l'écran 18 est réveillée.

Le système 10 propre à l'invention est simple dans sa réalisation, et présente donc un faible coût tout en offrant une moindre consommation d'énergie globale du système et un fort niveau de sécurisation du traitement de données par le système 10.

En relation avec le chronogramme de la figure 5, un exemple 50 chronologique des signaux de tension d'alimentation VBUS, de données DA, d'horloge CL, d'adressage @1, et au niveau de la borne d'alimentation Vdd de l'écran 18 est représenté.

Les signaux d'alimentation VBUS, de données DA, d'horloge CL, d'adressage @ 1 sont contrôlés et gérés par l'objet 31 portable, au travers du bus 34 de communication interne au système 10, pour activer ou désactiver la tension d'alimentation du ou des éléments du système 10 que l'objet 31 portable gère.

En abscisse figure l'axe des temps t.

En ordonnée figurent les niveaux bas à 0 et haut à 1 de tension pour chaque signal représenté.

L'objet 31 portable contrôle et gère les niveaux de tension des signaux d'alimentation VBUS, de données DA, d'horloge CL, d'adressage @1, afin d'activer ou désactiver la tension d'alimentation par exemple au niveau de la borne d'alimentation Vdd de l'écran 18.

Différents principaux évènements 51 à 55 apparaissent au cours du temps sont explicités ci-dessous.

Au démarrage, les niveaux de tous les signaux sont au niveau bas.

Tout d'abord, le signal de tension VBUS passe au niveau haut lors d'un premier temps t1.

Lors d'un deuxième temps t2, l'objet 31 portable passe le signal de tension de données DA au niveau haut.

Puis, lors d'un troisième temps t3, l'objet 31 portable passe le signal de tension d'horloge CL au niveau haut.

Lors d'un quatrième temps t4, par exemple suite à une initialisation ou une ré-initialisation du système 10, le signal de tension au niveau de la borne Vdd d'alimentation passe au niveau haut. L'écran 18 est alors alimenté et est opérationnel.

Lors d'un cinquième temps t5, l'objet 31 portable bascule les signaux de tension de données DA et d'horloge CL au niveau bas, puis, les re-bascule au niveau haut lors d'un sixième temps t6, sans provoquer un quelconque effet sur la borne d'alimentation Vdd de l'écran 18. L'écran 18 reste donc alimenté.

Ensuite, lors d'un septième temps t7, l'objet 31 portable bascule simultanément les signaux de tension de données DA et d'horloge CL au niveau bas.

Le basculement 51 au niveau bas des signaux de tension de données DA et d'horloge CL provoque, après un certain temps de courte durée, du principalement au temps de transmission interne, un passage 52 du signal d'adressage @ 1 du niveau bas au niveau haut.

Le routeur 41 s'adresse, lors d'un huitième temps t8, au dispositif 42 de commutation en changeant son état. La base du transistor T du dispositif 42 de commutation passant du niveau bas au niveau haut, commande le passage de l'état passant à l'état bloqué du transistor T.

Le passage 52 du signal d'adressage @ 1 du niveau bas au niveau haut provoque, après un certain temps de courte durée, due principalement au temps de transmission interne, un basculement 53 du signal de tension au niveau de la borne Vdd d'alimentation du niveau haut au niveau bas.

Un tel basculement 53 désactive, lors d'un neuvième temps t9, l'alimentation de l'écran 18. L'écran 18 n'est plus alimenté.

Puis, lors d'un dixième temps t10, l'objet 31 portable re-bascule les signaux de tension de données DA et d'horloge CL au niveau haut.

Le re-basculement 54 au niveau haut des signaux de tension de données DA et d'horloge CL provoque, après un certain temps de courte durée, due principalement au temps de transmission interne, un passage 55 du signal d'adressage @ 1 du niveau haut au niveau bas.

Le passage 55 du signal d'adressage @ 1 du niveau haut au niveau bas provoque, après un certain temps de courte durée, due principalement au temps de transmission interne, un basculement 56 du signal de tension au niveau de la borne Vdd d'alimentation du niveau bas au niveau haut.

Un tel basculement 56 active à nouveau, lors d'un douzième temps t12, l'alimentation de l'écran 18. L'écran 18 est de nouveau alimenté.

Pendant une période de sommeil correspondant à l'intervalle de temps t9 à t12, l'écran 18 n'est pas alimenté et ne consomme pas d'énergie, diminuant, de ce fait, la consommation globale du système 10. Le système 10 est alors dans le mode « basse consommation ».

Seuls l'objet 31 portable et le routeur 41 consomment de l'énergie pendant la durée de sommeil.

Le clavier 17 consomme de l'énergie seulement lorsqu'il est utilisé par un utilisateur du système 10.

## Revendications

1. Système (10) électronique portable pour contrôler une consommation d'énergie, le système comprenant au moins un élément (18) consommateur d'énergie, le système comprenant ou étant relié à un objet (31) communiquant, l'objet communiquant comportant des moyens pour communiquer au moins dans un sens de communication avec l'extérieur de l'objet communiquant,
**caractérisé en ce que** l'objet communiquant est apte à contrôler et gérer une consommation d'énergie d'au moins un élément consommateur d'énergie.

2. Système selon la revendication 1, dans lequel l'objet communiquant est relié audit au moins un élément consommateur d'énergie au travers d'un bus (34) de communication interne au système de type série ou parallèle.

3. Système selon la revendication 2, dans lequel l'objet communiquant est apte à commander un dispositif (42) de commutation, le dispositif de commutation étant relié, d'une part, à une borne (VBUS) d'alimentation issue d'une source d'alimentation, et d'autre part, à au moins une borne (Vdd) d'alimentation d'un élément consommateur d'énergie, le dispositif de commutation autorisant ou interdisant l'alimentation d'au moins un élément consommateur d'énergie.

4. Système selon l'une des revendications 2 et 3, dans lequel l'objet communiquant est apte à piloter le bus de communication interne au système, permettant de contrôler et gérer, à l'initiative de l'objet communiquant, l'accès audit au moins un élément consommateur d'énergie.

5. Système selon l'une des revendications 2 à 4, dans lequel le bus de communication interne est relié à une source d'alimentation.

6. Système selon l'une des revendications 1 à 5, dans lequel le système comporte une source d'alimentation.

7. Système selon l'une des revendications 1 à 5, dans lequel le système est relié à une source d'alimentation externe au système.

8. Système selon l'une des revendications précédentes, dans lequel le système comporte un dispositif (32;41) de sélection d'au moins un élément consommateur d'énergie parmi l'ensemble dudit au moins un élément consommateur d'énergie, pour activer ou désactiver une alimentation dudit au moins un élément consommateur d'énergie.

9. Système selon l'une des revendications précédentes, dans lequel l'objet communiquant est au moins un élément appartenant au groupe comprenant :
- une carte à puce de format de type ISO 7816 ;
- une carte de type carte SIM ;
- une clef de type USB ;
- un microcontrôleur.

10. Système selon l'une des revendications précédentes, dans lequel ledit au moins un élément consommateur d'énergie est compris au sein d'une liste comprenant :
- un afficheur (18) ;
- un clavier (17) ;
- un lecteur biométrique.

11. Système selon l'une des revendications précédentes, dans lequel l'objet communiquant est apte à contrôler et gérer, en outre, la communication avec l'extérieur du système.

12. Système selon l'une des revendications précédentes, dans lequel le système comporte une interface (11a) de communication à contact avec l'extérieur du système.

13. Système selon l'une des revendications précédentes, dans lequel le système comporte une interface (11 b) de communication sans contact avec l'extérieur du système.

14. Système selon l'une des revendications précédentes, dans lequel le système comporte un lecteur (30) d'objet communiquant.

15. Système selon l'une des revendications précédentes, dans lequel le système est un terminal (10).

16. Système selon l'une des revendications précédentes, dans lequel l'objet communiquant est apte à gérer au moins une autre interface de communication avec l'extérieur du système.

17. Objet (20 ; 31) communiquant pour contrôler une consommation d'énergie externe, l'objet communiquant comportant des moyens pour communiquer au moins dans un sens de communication avec l'extérieur,
**caractérisé en ce que** l'objet communiquant est apte à contrôler et gérer une consommation d'énergie d'au moins un élément (18) consommateur d'énergie externe à l'objet communiquant.

18. Objet communiquant selon la revendication 17, dans lequel l'objet communiquant supporte au moins une application comprise au sein du groupe comprenant :
- une application de paiement bancaire ;
- une application de stockage de données ;
- une application de santé ;
- une application de consultation de données ;
- une application d'un programme de fidélité ;
- une application de paiement d'un titre de transport ;
- une application de gestion d'au moins une interface de communication avec l'extérieur de l'objet communiquant.

19. Objet communiquant selon la revendication 17 ou 18, dans lequel l'objet communiquant est un objet (31) portable.

20. Objet communiquant selon l'une des revendications 17 à 19, dans lequel l'objet communiquant comprend, en outre, au moins un serveur.
